# EUROPÄISCHE PATENTSCHRIFT

(11) **EP 1 224 118 B1**
(45) Veröffentlichungstag und Bekanntmachung des Hinweises auf die Patenterteilung: **04.02.2004**
(21) Anmeldenummer: 00972729.8
(22) Anmeldetag: 11.10.2000
(51) Int. Cl.: B64D 1/22, H02G 1/02

(54) **VORRICHTUNG ZUM ANHÄNGEN EINER LAST AN EINEM HUBSCHRAUBER**
DEVICE FOR ATTACHING A LOAD TO A HELICOPTER
DISPOSITIF POUR ACCROCHER UNE CHARGE A UN HELICOPTERE

(30) Priorität: 20.10.1999 DE 19950405
(43) Veröffentlichungstag der Anmeldung: 24.07.2002
(73) Patentinhaber: ECMS Aviation Systems GmbH, 71634 Ludwigsburg (DE)
(72) Erfinder: SCHUSTER, Matthias, 71642 Ludwigsburg (DE)
(74) Vertreter: Heuckeroth, Volker, Dr.
(86) Internationale Anmeldenummer: PCT/EP2000/009987
(87) Internationale Veröffentlichungsnummer: WO 2001/028852

(56) Entgegenhaltungen:
- DE-A- 19 522 564
- DE-A- 19 623 562
- US-A- 1 725 677
- US-A- 3 934 847

## Beschreibung

Die Erfindung betrifft eine Vorrichtung zum Anhängen einer Last an einem Hubschrauber, mit zumindest einem Tragseil, das einen bezüglich einer Längsachse des Hubschraubers außermittigen ersten Seilabschnitt und einen gegenüberliegenden außermittigen zweiten Seilabschnitt aufweist, wobei das Tragseil mit dem Hubschrauber einerseits und der Last andererseits verbunden ist.

Eine derartige Vorrichtung ist aus der DE 196 23 562 Al bekannt. Eine weitere Vorrichtung dieser Art ist aus der DE 195 22 564 C2 bekannt.

Eine Vorrichtung der eingangs genannten Art dient allgemein dazu, eine Last an einem Hubschrauber hängend zu transportieren.

Lasten können im Sinne der vorliegenden Erfindung beispielsweise Güter sein oder Körbe, in denen Personen befördert werden.

Ein spezieller Anwendungsfall einer solchen Vorrichtung ist der Transport von Arbeitspersonal in einem Korb zu Freileitungen, an denen Installationsarbeiten oder Reparaturen vorgenommen werden müssen, oder an denen Signalbälle für die Luftfahrt angebracht werden sollen. Bei solchen Freileitungsarbeiten bringt der Hubschrauber den Korb mit dem Arbeitspersonal unter die Freileitung und hebt den Korb dann an, wobei an dem Korb eine seitlich abstehende Gabel angeordnet ist, so daß der Korb mit der Gabel die Freileitung unterfängt. Der Hubschrauber hebt den Korb dann an, bis der Korb mit einer gewissen Zugspannung an der Freileitung festliegt.

Andere Einsatzmöglichkeiten einer solchen Vorrichtung sind bspw. der Transport von Personen zu Kühltürmen, Fernsehtürmen, usw., um an diesen Arbeiten auszuführen oder der Einsatz zu Rettungszwecken, bspw. bei Hochhausbränden, bei denen ein Korb zur Personenförderung vor Fenstern, Balkonen oder auf dem Gebäudedach plaziert werden muß.

Während in der folgenden Beschreibung die Erfindung in einer Anwendung bei Freileitungsarbeiten beschrieben wird, versteht es sich, daß die vorliegende Erfindung jedoch nicht auf diese Anwendung beschränkt ist. Eine solche Vorrichtung kann grundsätzlich zum Transportieren von Lasten mittels eines Hubschraubers zu nur aus der Luft oder zu aus der Luft leichter als vom Boden aus erreichbaren Zielorten verwendet werden.

Ein allgemeines Problem beim hängenden Transportieren von Lasten mit einem Hubschrauber besteht darin, daß die Last zum Pendeln und Drehen neigt. Insbesondere ein Pendeln der Last unter dem Hubschrauber quer zu dessen Längsachse verändert ständig die Lage des Schwerpunkts der Gesamtanordnung aus Hubschrauber und Last, was zu kritischen Flugsituationen führen kann. Der Hubschrauberpilot muß derartige Schwerpunktslageänderungen dann aussteuern.

Um ein Pendeln quer zur Längsachse des Hubschraubers zu vermeiden, ist aus der DE 691 01 704 T2 eine Vorrichtung zum Anhängen einer Last an einem Hubschrauber beschrieben, die zwei außermittige Tragseile aufweist, wobei beide Tragseile mit einem Ende am Hubschrauber und mit dem anderen Ende an der Last fest angeschlagen sind. Ein Drehen der Last um die Hochachse wird dadurch weitgehend vermieden. Auch die Neigung der Last, quer zur Längsachse zu pendeln, wird auf diese Weise verringert.

Da ein Pendeln einer an Tragseilen aufgehängten Last jedoch nicht vollständig unterbunden werden kann, führt diese zwei separate seitliche Tragseile aufweisende bekannte Vorrichtung im Falle eines Pendelns der Last quer zur Längsachse zu ruckartig am Hubschrauber angreifenden Lastwechselkräften, weil beim Pendeln der Last eines der seitlichen Tragseile im wesentlichen entspannt ist, während das andere Tragseil ruckartig unter Spannung kommt. Solche ruckartigen Zugkraftänderungen können jedoch zu gefährlichen Flugsituationen des Hubschraubers führen.

Um dies zu vermeiden, ist in der DE 196 23 562 A1 ebenso wie in der DE 195 22 564 C2 eine Vorrichtung der eingangs genannten Art vorgeschlagen worden, die eine am Hubschrauber befestigte Traverse aufweist, die sich quer zur Längsachse des Hubschraubers erstreckt. Die Traverse weist äußere Umlenkrollen auf, wobei das Tragseil über die Umlenkrollen geführt ist. Das Tragseil ist mit seinen freien Enden direkt oder indirekt fest an der Last angeschlagen. Das Tragseil verläuft also von dem einen an der Last angeschlagenen Ende ausgehend mit einem ersten Seilabschnitt bezüglich der Längsachse des Hubschraubers außermittig zu der ersten Umlenkrolle an der Traverse, von dort horizontal zur gegenüberliegenden zweiten Umlenkrolle der Traverse, und von dort führt dann der zweite Seilabschnitt wiederum außermittig der Längsachse wieder zur Last, wo das andere Ende des Tragseils an der Last fest angeschlagen ist.

Das Tragseil ist somit relativ zur Traverse beweglich und kann sich demnach entlang der Traverse relativ zum Hubschrauber verschieben.

Dadurch, daß anstelle zweier separater seitlicher Tragseile ein umlaufendes Tragseil verwendet wird, werden im Falle eines Pendelns der Last ruckartige Lastkraftänderungen vermieden.

Dennoch ist diese bekannte Vorrichtung nachteilig, weil das Tragseil hubschrauberseitig relativ zum Hubschrauber verschiebbar ist. Es ist nämlich nicht mit einfachen konstruktiven Mitteln möglich, die auf das Tragseil wirkende Lastkraft am Tragseil selbst abzugreifen, da eine entsprechende Kraftmeßvorrichtung wegen der Beweglichkeit des Tragseils im Bereich des Hubschraubers dort nicht integriert werden kann. Würde ein Dehnungsmeßstreifen im Bereich der Traverse in das Tragseil integriert, würde dieser sich ständig mitbewegen, ebenso wie die elektrische Verkabelung, mit der eine solche Kraftmeßvorrichtung mit Anzeigevorrichtungen im Cockpit verbunden ist. Da des weiteren ein solches Tragseil aus Sicherheitsgründen stets kappbar sein muß, wozu bei der bekannten Vorrichtung zumindest eine Kappvorrichtung an dem Tragseil im Bereich der Traverse vorgesehen ist, würde dies außerdem bei einem Kappen des Tragseils den Verlust oder eine Beschädigung der Kraftmeßvorrichtung bedeuten. Um eine Lastkraftmessung zu ermöglichen, ist bei der bekannten Vorrichtung daher vorgesehen, die Traverse selbst am Hubschrauber mittels Seilen aufzuhängen, und an diesen Seilen die Lastkraft abzugreifen, was jedoch mit einem erhöhten Aufwand verbunden ist.

Ein weiterer Nachteil der bekannten Vorrichtung ist die Traverse selbst, die wegen ihrer ausladenden Abmessungen die Montage der Vorrichtung erschwert und außerdem ein hohes Eigengewicht besitzt, das zu einer Verminderung der mit dem Hubschrauber hebbaren Last führt.

Der Erfindung liegt daher die Aufgabe zugrunde, eine Vorrichtung der eingangs genannten Art weiter zu verbessern.

Erfindungsgemäß wird diese Aufgabe hinsichtlich der eingangs genannten Vorrichtung dadurch gelöst, daß Enden des Tragseils hubschrauberseitig fest angeschlagen sind, und daß das Tragseil mit der Last relativ zu dieser beweglich verbunden ist, derart, daß die Last entlang des Tragseils verschiebbar ist.

Im Unterschied zu der bekannten Vorrichtung ist das Tragseil bei der erfindungsgemäßen Vorrichtung nicht selbst umlaufend ausgebildet, sondern mit seinen Enden hubschrauberseitig an diesem fest angeschlagen. Mit der Last ist das Tragseil demgegenüber so verbunden, daß sich die Last entlang des Tragseils frei verschieben kann, so daß im Falle eines Pendelns der Last ruckartige Lastkraftänderungen, die die Flugstabilität des Hubschraubers beeinträchtigen können, vermieden werden, weil beide Seilabschnitte des Tragseils stets unter Spannung gehalten sind. Dadurch, daß das Tragseil jedoch selbst nicht umlaufend ausgestaltet ist, eröffnet dies die vorteilhafte Möglichkeit, eine Lastkraftmessung direkt oder indirekt am Tragseil vorzusehen. Der technische Aufwand wird somit gegenüber der bekannten Vorrichtung wegen der Möglichkeit des Abgriffs der Lastkraft am Tragseil selbst herabgesetzt. Die Neigung der Last zum Pendeln quer zur Längsachse sowie zum Drehen um die Hochachse wird durch die erfindungsgemäße Vorrichtung ebenso vermindert. Auch im Falle eines Einsatzes der Vorrichtung zu Freileitungsarbeiten ermöglicht es die freie Beweglichkeit der Last relativ zum Tragseil, den Hubschrauber seitlich zur Last zu versetzen, oder einen Korb in Schräglage an einer Freileitung festzulegen. Ein weiterer Vorteil der erfindungsgemäßen Vorrichtung besteht bei dieser Anwendung gegenüber der bekannten Vorrichtung mit dem an der Traverse beweglich umlaufenden Tragseil darin, daß das Arbeitspersonal den Korb vor dem Andocken an der Freileitung am Tragseil in eine geeignete Position seitlich verschieben oder schrägstellen kann, so daß das Andocken an der Freileitung wesentlich vereinfacht wird.

In einer bevorzugten Ausgestaltung ist das Tragseil lastseitig um zumindest eine Umlenkung geführt mit der Last verbunden.

Diese Maßnahme hat den Vorteil, daß mit einfachen Mitteln eine Beweglichkeit der Last relativ zum Tragseil erreicht werden kann.

Dabei ist es weiterhin bevorzugt, wenn das Tragseil lastseitig durch zumindest eine Umlenkrolle geführt ist, die an der Last angeschlagen ist.

Mittels einer derartigen Umlenkrolle wird vorteilhafterweise eine leichtgängige Beweglichkeit der Last relativ zum Tragseil erreicht, so daß sich die Last im Flug stets in ihre mittige tiefste Lage frei mit geringem Reibungswiderstand zurückbewegen kann, in der der Lastschwerpunkt mittig unter dem Hubschrauber liegt.

Dabei ist es weiterhin bevorzugt, wenn die Umlenkrolle unverlierbar am Tragseil angebracht und an der Last abnehmbar befestigbar ist.

Diese Maßnahme hat den Vorteil, daß das Tragseil mit sehr geringem Montageaufwand an der Last befestigt werden kann, und eine Vormontage der Umlenkrolle am Tragseil nicht erforderlich ist. Eine solche Umlenkrolle kann bspw. einen Bügel aufweisen, wobei das Tragseil zwischen der Führungsnut der Rolle und dem Bügel hindurchgeführt ist, wobei der Bügel bspw. mit einem Schäkel versehen ist, mit der die Umlenkrolle an der Last angeschäkelt werden kann.

In einer weiteren bevorzugten Ausgestaltung steht/stehen der erste Seilabschnitt und/oder der zweite Seilabschnitt hubschrauberseitig mit einer ortsfesten Kraftmeßvorrichtung in Wirkverbindung, um eine auf das Tragseil wirkende Zuglast zu messen.

Wie bereits erwähnt, eröffnet die erfindungsgemäße Ausgestaltung der Vorrichtung die vorteilhafte Möglichkeit, eine Kraftmeßvorrichtung vorzusehen, die die auf das Tragseil wirkende Zuglast messen kann, weil das Tragseil im Unterschied zu der bekannten Vorrichtung nicht umlaufend ausgestaltet ist, sondern relativ zum Hubschrauber feststeht. Das Tragseil kann mit dem ersten Seilabschnitt und/oder dem zweiten Seilabschnitt dabei vorteilhafterweise direkt oder indirekt mit der Kraftmeßvorrichtung verbunden sein, je nachdem, was sich als zweckdienlicher erweist.

In einer besonders bevorzugten Ausgestaltung sind der erste Seilabschnitt an einem äußeren Hebelarm eines ersten zweiarmigen Hebels und der zweite Seilabschnitt an einem äußeren Hebelarm eines zweiten zweiarmigen Hebels angeschlagen, wobei die Hebel jeweils um eine etwa parallel zur Längsachse des Hubschraubers verlaufende Schwenkachse verschwenkbar am Hubschrauber befestigt sind, und wobei innere Hebelarme der Hebel miteinander durch ein Zugelement verbunden sind.

Diese Ausgestaltung der erfindungsgemäßen Vorrichtung ist nun insbesondere in Verbindung mit dem Vorsehen einer Kraftmeßvorrichtung zum Messen der auf das Tragseil wirkenden Zuglast von Vorteil, da die an den äußeren Hebelarmen der Hebel angreifende Zugkraft der Seilabschnitte durch die inneren Hebelarme der Hebel in eine Zugspannung des Zugelements umgesetzt werden, wobei dann die Zugspannung des weiteren Zugelements gemessen werden kann, woraus sich die an der Vorrichtung und damit am Hubschrauber angreifende Lastkraft bzw. Zugkraft messen läßt. Der weitere Vorteil dieser Ausgestaltung besteht darin, daß die Anordnung aus den beiden Hebeln und dem Zugelement dauerhaft am Hubschrauber montiert sein kann, insbesondere zusammen mit einer Kraftmeßvorrichtung, während das Tragseil im Bedarfsfall mit seinen freien Enden an die Hebel, bspw. mittels einer Schäkelverbindung, angeschlagen werden kann. Ein noch weiterer Vorteil dieser Ausgestaltung besteht darin, daß die Anordnung aus den beiden Hebeln und dem weiteren Seil wesentlich gewichtsärmer ausgestaltet werden kann als die Traverse der bekannten Vorrichtung. Als Zugelement kann eine Stange, eine Teleskopstange oder auch ein Seil verwendet werden.

Dabei ist es weiterhin bevorzugt, wenn der erste Hebel und der zweite Hebel einander gegenüberliegend am Landegestell des Hubschraubers angeordnet sind.

Auf diese Weise sind die äußeren Hebelarme, an denen der erste Seilabschnitt bzw. der Seilabschnitt angreifen, am Hubschrauber möglichst tief und möglichst weit voneinander beabstandet angeordnet, wodurch ein Pendeln und ein Drehen der Last noch weiter reduziert wird.

In einer weiteren bevorzugten Ausgestaltung überragen die äußeren Hebelarme mit ihrem freien Ende, an dem der erste bzw. zweite Seilabschnitt angeschlagen sind, im Lastzustand die Kufen des Hubschraubers nach unten.

Die vorteilhafte Wirkung dieser Maßnahme besteht darin, daß die Lastkraft noch tiefer am Hubschrauber angreift, wodurch die Flugstabilität des Hubschraubers bei angehängter Last weiter verbessert wird.

In einer weiteren bevorzugten Ausgestaltung überragen die äußeren Hebelarme die Kufen des Hubschraubers seitlich nach außen.

Durch diese Maßnahme wird die Neigung der Last zum Drehen um die Hochachse bzw. zum Pendeln quer zur Längsachse weiter reduziert.

In einer weiteren bevorzugten Ausgestaltung sind Enden der inneren Hebelarme beider Hebel, an denen das Zugelement angeschlagen ist, bezüglich der jeweiligen Schwenkachse so positioniert, daß die inneren Hebelarme im Lastzustand in gegensinnigen Schwenkrichtungen belastet sind.

Dadurch wird vorteilhafterweise stets gewährleistet, daß die an den Hebeln angreifende Lastkraft der Last auf beide Hebel ein gegensinniges Drehmoment ausübt, so daß das Zugelement zwischen den inneren Hebelarmen stets unter Zugspannung gehalten wird, so daß eine Kraftmessung an diesem erfolgen kann. Beispielsweise wird dies realisiert, indem die Enden innerhalb und oberhalb der Schwenkachsen angeordnet sind.

In einer weiteren bevorzugten Ausgestaltung liegen Enden der äußeren Hebelarme, an denen die Enden des Tragseils angeschlagen sind, tiefer als die Schwenkachsen der Hebel.

Dies hat den Vorteil, daß bei einer seitlichen Verlagerung der Last bezüglich der Längsachse des Hubschraubers stets gewährleistet ist, daß die Hebel nicht in die entgegengesetzte Drehrichtung umklappen, weil vermieden wird, daß die Kraftrichtung der Last durch die Schwenkachse hindurch geht.

Besonders vorteilhaft ist es, wenn die Kraftmeßvorrichtung die Zugspannung des Zugelements mißt.

Durch Messen der Zugspannung des Zugelements, das bei angehängter Last unter Zugspannung steht, kann die auf das Tragseil wirkende Lastkraft gemessen und im Cockpit des Hubschraubers in einer Anzeigevorrichtung angezeigt werden. Da die Länge der Hebelarme der beiden Hebel bekannt ist, ergibt sich aus der Zugspannung des Zugelements die auf das Tragseil wirkende Zugkraft durch eine einfache Umrechnung, die auf elektronischem Wege erfolgen kann.

In einer weiteren bevorzugten Ausgestaltung ist das Zugelement ein Seil.

Diese Maßnahme hat den Vorteil, daß die Verwendung eines Seils als Zugelement zwischen den inneren Hebelarmen der Hebel zu einer einerseits gewichtsarmen und andererseits kostengünstigen Ausgestaltung der erfindungsgemäßen Vorrichtung führt.

In einer weiteren bevorzugten Ausgestaltung sind die Hebel im lastfreien Zustand in eine Lage vorgespannt, in der die äußeren Hebelarme und die inneren Hebelarme die Kufen des Hubschraubers nicht nach unten überragen.

Hierbei ist nun von weiterem Vorteil, daß im Falle, daß die äußeren Hebelarme die Kufen im Lastzustand nach unten überragen, der Hubschrauber auf dem Boden ohne Abhängen der Last von den äußeren Hebelarmen hinter der abgesetzten Last landen kann, ohne daß die beiden Hebel dabei mit dem Boden in Berührung kommen. Dadurch, daß die Last nicht abgehängt werden muß, wird Zeit und Arbeit zwischen zwei Einsatzflügen eingespart.

Bevorzugt ist es dabei, wenn die Hebel mit Federkraft beaufschlagt sind.

Dazu kann bspw. im Fall, daß das Zugelement ein Seil ist, das Seil mit einer Zugfeder verbunden werden, so daß die Zugfeder im lastfreien Zustand der Hebel das Seil zusammenzieht und damit den Abstand zwischen den inneren Hebelarmen verkürzt. Es kann aber auch vorgesehen sein, die beiden Hebel an ihren Schwenkachsen, bspw. mittels einer Torsionsfeder, vorzuspannen.

Alternativ zu der Ausgestaltung der Vorrichtung mit den beiden Hebeln ist es auch bevorzugt, wenn der erste Seilabschnitt und/oder der zweite Seilabschnitt über eine Umlenkung im Bereich des Landegestells des Hubschraubers geführt ist/sind und an der Kraftmeßvorrichtung direkt angreift/angreifen.

In diesem Fall kann die Kraftmeßvorrichtung bspw. mittig unter dem Rumpf des Hubschraubers befestigt sein, wobei dann die Seilabschnitte über die Umlenkungen zu der Kraftmeßvorrichtung geführt sind und an dieser angreifen. Die Kraftmeßvorrichtung kann in diesem Fall bspw. eine Kraftmeßdose sein, mit der Zugkräfte gemessen werden können. Auch diese Ausgestaltung hat den Vorteil, besonders gewichtsarm zu sein.

In einer weiteren bevorzugten Ausgestaltung ist am ersten Seilabschnitt und am zweiten Seilabschnitt im Bereich ihrer hubschrauberseitigen Befestigung jeweils zumindest eine Kappvorrichtung zum Kappen des Tragseils angeordnet.

Da an einem Hubschrauber hängend transportierte Lasten im Notfall abwerfbar sein müssen, ist vorteilhaft eine Kappvorrichtung an beiden Seilabschnitten im Bereich ihrer hubschrauberseitigen Befestigung vorgesehen. Das Zugelement, das bei der Ausgestaltung der Vorrichtung mit den beiden Hebeln zwischen den inneren Hebelarmen verläuft, bedarf dagegen keiner Kappvorrichtung, so daß, wie bereits erwähnt, auch eine Kraftmeßvorrichtung an dem Zugelement beim Kappen des Tragseils nicht verloren gehen kann oder das Abwerfen der Last behindert. Um das Kappen beidseitig zeitgleich und redundant erfolgen zu lassen, ist es vorteilhaft, zwei unabhängige Kappvorrichtungen für jeden Seilabschnitt vorzusehen, um kleine Zeitunterschiede bei der Auslösung auszugleichen. Die Auslösung der Kappvorrichtungen kann elektrisch oder pyrotechnisch erfolgen. Wenn für jeden Seilabschnitt zwei Kappvorrichtungen vorgesehen werden, werden mit höchster Wahrscheinlichkeit einseitige Lastigkeiten vermieden, die entstehen, wenn eine Kappvorrichtung versagt und das Tragseil beim Trennen durch die lastseitigen Umlenkrollen ausfädeln muß.

Im Zusammenhang mit den Kappvorrichtungen ist es weiterhin bevorzugt, wenn die äußeren Hebelarme rohrförmig ausgebildet sind, wenn der erste Seilabschnitt und der zweite Seilabschnitt mit ihrem jeweiligen Ende in die äußeren Hebelarme eingeführt sind, und wenn die Kappvorrichtungen in den äußeren Hebelarmen integriert sind.

Bei dieser Ausgestaltung ergibt sich einerseits eine vorteilhafte Art des Anschlagens der Enden des Tragseils an den äußeren Hebelarmen, indem diese bspw. in die rohrförmig ausgebildeten Hebel geführt werden, wobei an den Enden des Tragseils jeweils ein Auge angeordnet sein kann, das durch einen Querbolzen durch den jeweiligen Hebelarm gehalten wird. Die jeweils zumindest eine Kappvorrichtung kann dann bspw. in Form eines Sprengmeißels in den äußeren Hebelarmen integriert sein.

Dabei ist es bevorzugt, wenn die Kappvorrichtungen simultan auslösbar sind.

Dadurch wird vorteilhafterweise erreicht, daß es beim Kappen des Tragseils nicht zu außermittigen Verlagerungen der Last kommt, die die Flugstabilität des Hubschraubers beeinträchtigen könnten.

In einer weiteren bevorzugten Ausgestaltung sind zwei Tragseile vorgesehen, die in Längsrichtung des Hubschraubers voneinander beabstandet angeordnet und unabhängig voneinander mit dem Hubschrauber und der Last verbunden sind.

Es ist demnach möglich, die erfindungsgemäße Vorrichtung mit zwei Tragseilen in einer oder mehreren der zuvor genannten Ausgestaltungen am Hubschrauber vorzusehen, um die Last am Hubschrauber anzuhängen. Durch zwei Tragseile nach den zuvor genannten Ausgestaltungen wird auch die aus Sicherheitsgründen geforderte Redundanz bei der Aufhängung der Last erreicht. Selbstverständlich kann die erfindungsgemäße Vorrichtung auch mit nur einem Tragseil in einer der zuvor genannten Ausgestaltungen ausgestattet, und zur Sicherung der Last kann ein zweites mittig unter dem Hubschrauber angeordnetes Tragseil vorgesehen sein.

Weiterhin ist es bevorzugt, wenn an dem ersten Seilabschnitt und/oder an dem zweiten Seilabschnitt eine Zugleine angebracht ist.

Dies hat in dem Fall, daß als Last ein Korb zur Personenbeförderung angehängt ist, den Vorteil, daß die Last durch Ziehen an der Zugleine relativ zum Tragseil leicht in eine außermittige Lage gezogen werden kann, beispielsweise zum den Korb in eine zum Andocken an einer Freileitung günstige Position zu bewegen.

Weitere Vorteile ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Vorrichtung zum Anhängen einer Last an einem Hubschrauber in einer Vorderansicht;
- Fig. 2: die Vorrichtung aus Fig. 1 in einer Vorderansicht in Alleinstellung mit weiteren Einzelheiten;
- Fig. 3: einen Korb zur Verwendung mit der Vorrichtung bei einem Einsatz der Vorrichtung für Freileitungsarbeiten;
- Fig. 4: einen Ausschnitt der Vorrichtung in Fig. 2 in einem lastfreien Betriebszustand; und
- Fig. 5: ein weiteres Ausführungsbeispiel einer Vorrichtung zum Anhängen einer Last an einem Hubschrauber.

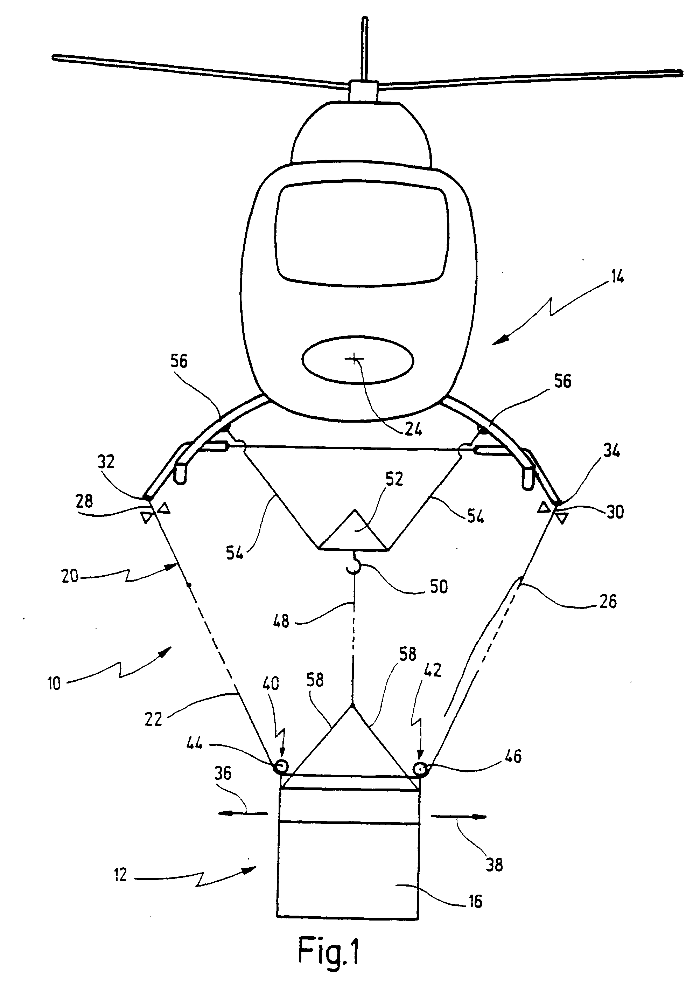

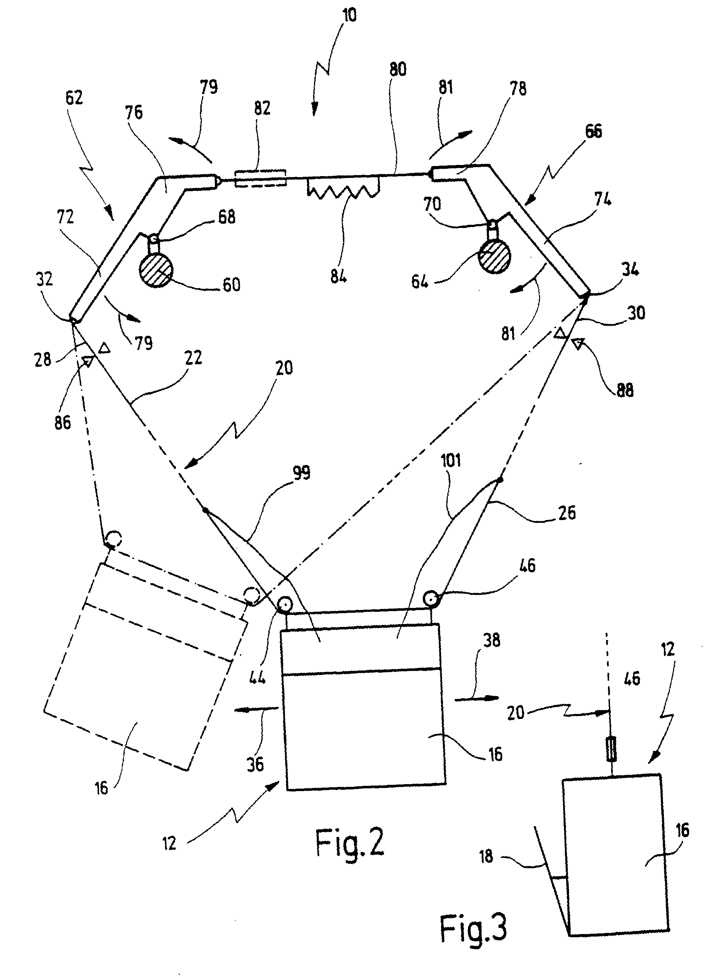

In Fig. 1 und 2 ist eine mit dem allgemeinen Bezugszeichen 10 versehene Vorrichtung zum Anhängen einer Last 12 an einen Hubschrauber 14 dargestellt.

In dem gezeigten Ausführungsbeispiel ist die Last 12 ein Korb 16 zur Personenbeförderung.

In dem Korb 16 wird beispielsweise Arbeitspersonal zu Arbeitseinsätzen an Freileitungen transportiert. Der Korb 16 weist in diesem Fall eine Gabel 18 auf, die seitlich von dem übrigen Korb 16 absteht.

Mit dem Hubschrauber 14 kann der Korb 16 mit dem darin stehenden Arbeitspersonal zu einer Freileitung geflogen werden, wobei der Hubschrauber 14 die Freileitung dann mit der Gabel 18 des Korbs 16 unterfängt und durch weiteres Anheben des Korbes 16 diesen an der Freileitung festlegt. Der Hubschrauber 14 hält den Korb 16 dann im Schwebflug unter Zugspannung an der Freileitung fest, wobei der Korb 16 durch die Gabel 18 an der Freileitung lagefest gehalten wird.

Die Vorrichtung 10 weist ein Tragseil 20 auf. Das Tragseil 20 kann bspw. ein mehradriges dünnes Stahlseil, ein Kunststoffseil, oder ein textiles Seil gegebenenfalls mit Armierungen sein.

Das Tragseil 20 ist insgesamt einstückig ausgebildet. Dies kann wie im dargestellten Ausführungsbeispiel durch ein insgesamt einteiliges Tragseil 20 realisiert sein. Das Tragseil 20 kann zum leichteren Entfernen der Last, zur besseren Demontage der Vorrichtung 10 oder zur Variation der Distanz zwischen dem Hubschrauber 14 und der Last 12 aber auch aus mehreren hintereinander verbundenen Seilen bestehen.

Das Tragseil 20 weist einen ersten Seilabschnitt 22 auf, der bezüglich einer Längsachse 24 des Hubschraubers 14 außermittig verläuft.

Das Tragseil 20 weist weiterhin einen zweiten Seilabschnitt 26 auf, der dem ersten Seilabschnitt 22 des Tragseils 20 gegenüberliegend auf der anderen Seite der Längsachse 24 verlaufend angeordnet ist.

Der erste Seilabschnitt 22 und der zweite Seilabschnitt 26 spannen zusammen eine Ebene auf, die quer zur Längsachse 24 verläuft.

Der erste Seilabschnitt 22 und der zweite Seilabschnitt 26 sind im Bereich der Last 12 einstückig miteinander verbunden.

Das Tragseil 20 weist ein erstes Ende 28 und ein zweites Ende 30 auf. Mit den Enden 28 und 30 ist das Tragseil 20 hubschrauberseitig fest angeschlagen, und zwar ist das erste Ende 28 des Tragseils 20 an einem ersten Befestigungspunkt 32 und das zweite Ende 30 an einen zweiten Befestigungspunkt 34 fest angeschlagen, wie nachfolgend noch näher beschrieben wird.

Mit der Last 12 ist das Tragseil 20 dagegen relativ zur Last 12 beweglich verbunden, so daß die Last 12 entlang des Tragseils verschiebbar ist, wie mit Pfeilen 36 und 38 angedeutet ist, und wie in Fig. 2 mit unterbrochenen Linien dargestellt ist.

Lastseitig ist das Tragseil 20 um zwei Umlenkungen 40 und 42 geführt. Die Umlenkungen 40 und 42 werden durch Umlenkrollen 44 und 46 gebildet, die jeweils an der Last 12 angeschlagen sind.

Die Umlenkrollen 44 und 46 sind dabei unverlierbar am Tragseil 20 angebracht und an der Last 12 abnehmbar befestigt. Die Umlenkrollen 44 und 46 können jeweils als ein Rollenblock ausgeführt sein, bei dem die Führungsrolle von einem Bügel übergriffen wird, so daß das Tragseil 20 zwischen Führungsrolle und Bügel geführt ist. An dem Bügel ist bspw. ein Schäkel angebracht, mit dem die Umlenkrollen 44 und 46 dann an der Last 12 angeschäkelt werden können.

In Fig. 1 ist, um eine Redundanz der Aufhängung der Last 12 zu erreichen, noch ein zusätzliches Tragseil 48 dargestellt, das bezüglich der Längsachse 24 mittig unter dem Hubschrauber 14 angeordnet und an einem Lasthaken 50 angeschlagen ist. Der Lasthaken 50 ist an einem pyramidenförmigen Element 52 angeordnet, das über Seile 54 am Hubschrauber 14, hier an Bügeln 56 des Hubschrauberlandegestells angehängt ist. Das Tragseil 48 ist mit der Last 12 über weitere Tragseile 58 fest verbunden.

Die Aufhängung der Last 12 an dem zusätzlichen Tragseil 48 und den Tragseilen 58 dient lediglich als redundante Sicherung der Aufhängung der Last 12 an dem Tragseil 20, so daß das Tragseil 48 bei intaktem Tragseil 20 entspannt ist, d.h. keine Tragfunktion übernimmt. Die Last 12 bleibt auch mit der Sicherung durch das Tragseil 48 relativ zu dem Tragseil 20 verschiebbar, da das Tragseil 48 nur an einen Punkt, nämlich dem Lasthaken 50 angeschlagen ist.

Im folgenden wird nun die Befestigung des Tragseils 20 am Hubschrauber 14 näher beschrieben.

Dazu ist an einer rechten Kufe 60 ein erster zweiarmiger Hebel 62 befestigt, und an einer linken Kufe 64 des Hubschraubers 14 ist ein zweiter zweiarmiger Hebel 66 befestigt. Der erste Hebel 62 und der zweite Hebel 66 stehen sich dabei auf gleicher axialer Höhe gegenüber.

Der erste Hebel 62 ist um eine erste Schwenkachse 68, die etwa parallel zur Längsachse 24 des Hubschraubers 24 verläuft, verschwenkbar an der Kufe 60 befestigt. Ebenso ist der zweite zweiarmige Hebel 66 um eine zweite Schwenkachse 70, die ebenfalls etwa parallel zur Längsachse 24 des Hubschraubers 14 verläuft, verschwenkbar an der Kufe 64 befestigt.

Der Befestigungspunkt 32 des ersten Endes 28 des Tragseils 20 befindet sich an einem freien Ende eines äußeren Hebelarms 72 des ersten Hebels 62, während sich der zweite Befestigungspunkt 34 des zweiten Endes 30 des Tragseils 20 an einem freien Ende eines äußeren Hebelarms 74 des zweiten Hebels 66 befindet. Dabei liegen das Ende des äußeren Hebelarms 72 und das Ende des äußeren Hebelarms 74 tiefer als die zugehörigen Schwenkachsen 68 und 70.

Der erste Hebel 62 weist weiterhin einen inneren Hebelarm 76 auf, während der zweite Hebel 66 ebenfalls einen inneren Hebelarm 78 aufweist.

Der äußere Hebelarm 72 und der innere Hebelarm 76 des ersten Hebels 62 sind starr beispielsweise einstückig miteinander verbunden, und ebenso ist der äußere Hebelarm 74 mit dem inneren Hebelarm 78 starr verbunden.

Die äußeren Hebelarme 72 und 74 des ersten Hebels 62 bzw. zweiten Hebels 66 überragen die Kufe 60 bzw. 64 im Lastzustand sowohl nach unten als auch seitlich nach außen.

Die äußeren Hebelarme 62 bzw. 74 bilden mit den jeweiligen inneren Hebelarmen 76 bzw. 78 einen Winkel im gezeigten Ausführungsbeispiel von etwa 130°.

Die inneren Hebelarme 76 und 78 sind über ein Zugelement 80 miteinander verbunden. Das Zugelement 80 ist in Form eines Seils ausgebildet, kann aber auch eine Stange oder eine Teleskopstange sein.

Im Lastzustand, d.h. wenn die Last 12 frei hängt, verlaufen die inneren Hebelarme 76 und 78 im gezeigten Ausführungsbeispiel etwa horizontal. Dies ergibt sich aus der im Ausführungsbeispiel gezeigten Wahl der Formgebung der Hebel 62 und 66. Ohne daß die Hebel 62, 66 auf diese Form beschränkt sind, ist lediglich zu berücksichtigen, daß die Enden der inneren Hebelarme 76, 78, an denen das Zugelement 80 angeschlagen ist, bezüglich der jeweiligen Schwenkachse 68 bzw. 70 so positioniert sind, daß die Hebel 62, 66 im Lastzustand in gegensinnigen Schwenkrichtungen belastet sind, wie hiernach noch beschrieben wird.

Die Enden der inneren Hebelarme 76, 78 sind dabei oberhalb und innerhalb der Schwenkachsen 68 und 70 angeordnet.

Das Zugelement 80 kann mit den inneren Hebelarmen 76 und 78 leicht demontierbar verbunden sein.

Im Lastzustand üben die Seilabschnitte 22 und 26 des Tragseils 20 auf die äußeren Hebel 72 bzw. 74 jeweils ein Drehmoment aus, das die Hebel 62 bzw. 66 um die Schwenkachsen 68 bzw. 70 im Gegenuhrzeigersinn (Hebel 62, Pfeile 79) bzw. Uhrzeigersinn (Hebel 66, Pfeile 81) zu drehen versucht. Das Zugelement 80 kommt dabei unter Spannung und wirkt somit den Drehmomenten entgegen, so daß die Hebel 62 bzw. 66 im Lastzustand die in Fig. 2 gezeigte stabile Lage einnehmen.

An dem Zugelement 80 ist eine Kraftmeßvorrichtung 82 vorgesehen, bspw. in Form eines Dehnungsmeßstreifens oder einer Kraftmeßdose, mit der die Zugkraft im Zugelement 80 abgegriffen und daraus die auf das Tragseil 20 wirkende Lastkraft bzw. Zugkraft, gemessen werden kann. Mittels der Kraftmeßvorrichtung 82 kann der Hubschrauberpilot über eine entsprechende Anzeige im Cockpit den Korb 16 mit einer geeigneten Zugkraft an der Freileitung festlegen und die Zugspannung kontrollieren, ohne daß die Gefahr besteht, daß der Hubschrauber den Korb 16 mit einer zu hohen oder zu geringen Zugkraft gegen die Freileitung zieht.

Wie aus Fig. 2 hervorgeht, kann der Tragkorb 16 aufgrund seiner beweglichen Verbindung mit dem Tragseil 20 auch in schräg gestellter Lage an einem schräg verlaufenden Abschnitt einer Freileitung, bspw. in Freileitungsmastnähe, sicher angedockt werden, während der Hubschrauber 14 dabei seine horizontale Fluglage beibehalten kann. Der Korb 16 kann aber auch ohne Schrägstellung relativ zum Hubschrauber 14 seitlich versetzt werden.

Des weiteren ist bei der Vorrichtung 10 vorgesehen, die Hebel 62 und 66 im lastfreien Zustand in eine Lage vorzuspannen, in der die äußeren Hebelarme 72 bzw. 74 und die inneren Hebelarme 76 bzw. 78 die Kufen 60 und 64 des Hubschraubers 14 nicht nach unten überragen. Die Hebel 62 und 66 sind dazu mit Federkraft beaufschlagt.

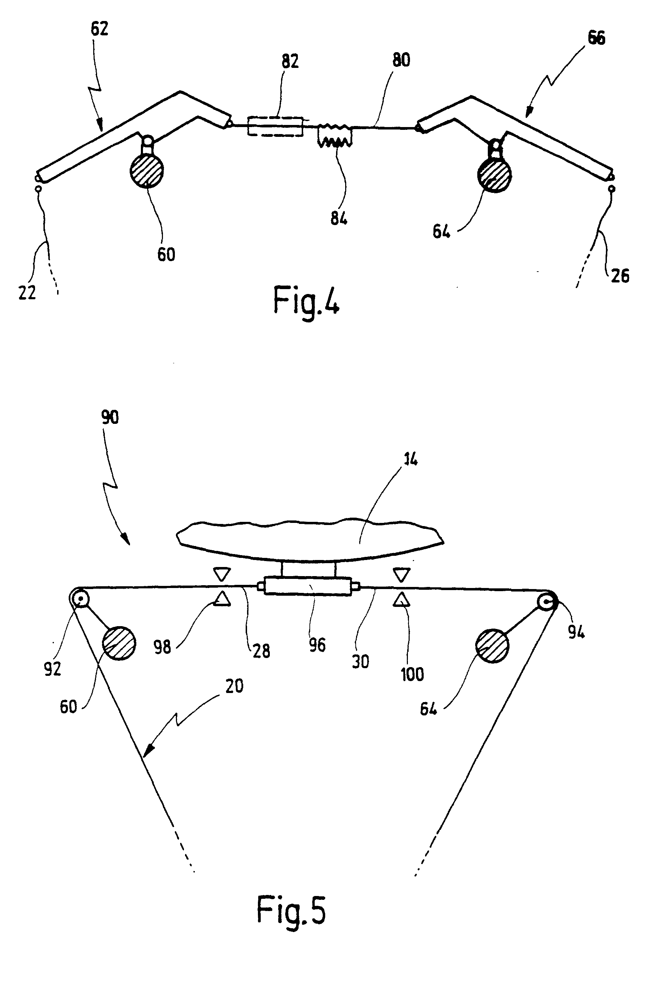

Dazu steht bspw. das Zugelement 80 mit einer Feder 84 in Wirkverbindung, die im Lastzustand der Vorrichtung 10 gespannt ist, und sich im lastfreien Zustand verkürzt und die Hebel 62 und 66 dabei nach innen verschwenkt, wie in Fig. 4 dargestellt ist. Im gezeigten Fall, daß das Zugelement 80 ein Seil ist, kann die Zugfeder 84 im Seil integriert oder parallel dazu geschaltet sein. Im Falle, daß das Zugelement 80 in Form einer Teleskopstange ausgeführt ist, kann die Teleskopstange die Feder 84 enthalten, die die Teleskopstange im unbelasteten Zustand verkürzt, wodurch ebenfalls die Hebel wie vorstehend beschrieben verschwenkt werden. Es ist aber auch möglich, die Hebel 62, 66 an ihren Schwenkachsen 68 bzw. 70 mit Torsionsfedern vorzuspannen.

Vor dem Landen des Hubschraubers 14 kann somit die Last 12 zunächst auf dem Boden abgesetzt werden, wobei sich die Zugfeder 84 entspannt und zusammenzieht und den Abstand zwischen den inneren Hebelarmen 76 und 78 verkürzt, wodurch die äußeren Hebelarme 72 und 74 nach oben verschwenkt werden, so daß diese nicht mit dem Boden in Berührung kommen, wenn der Hubschrauber 14 dann auf den Kufen 60 und 64 hinter der Last 12 landet. Die Last 12 muß also zum Landen nicht vom Hubschrauber 14 abgehängt werden.

Des weiteren ist sowohl an dem ersten Seilabschnitt 22 als auch an dem zweiten Seilabschnitt 30 jeweils zumindest eine Kappvorrichtung 86 bzw. 88 vorgesehen, mit denen das Tragseil 20 simultan beidseits der Last 12 im Notfall gekappt werden kann, um die Last 12 abwerfen zu können.

In diesem Zusammenhang können die äußeren Hebelarme 72 und 74 der Hebel 62 und 66 rohrförmig ausgebildet sein. Die Kappvorrichtungen 86 bzw. 88 sind dann in den äußeren Hebelarmen 72 und 74, bspw. in Form von Sprengmeißeln, integriert. Die Enden 28 und 30 des Tragseils 20 sind dann ferner mit einem Auge versehen, das durch einen Querbolzen durch die äußeren Hebelarme 72 und 74 gehalten wird. Die Kappvorrichtungen 86 bzw. 88 führen dann zu einer Trennung der Seilabschnitte 22 und 26 in den äußeren Hebelarmen 72 und 74.

Weiterhin ist an dem ersten Seilabschnitt 22 und an dem zweiten Seilabschnitt 26 jeweils eine Zugleine 99 bzw. 101 angebracht, wie in Fig. 2 angedeutet ist. Durch Ziehen an der Zugleine 99 kann der Korb 16 in Richtung des Pfeils 36 relativ zum Tragseil 20 und durch Ziehen an der Zugleine 101 kann der Korb 16 in Richtung des Pfeils 38 relativ zum Tragseil 20 an diesem verschoben werden.

In Fig. 5 ist noch ein weiteres Ausführungsbeispiel 90 einer Vorrichtung zum Anhängen der Last 12 an den Hubschrauber 14 dargestellt, die sich von der Vorrichtung 10 dadurch unterscheidet, daß die Enden 28 und 30 des Tragseils 20 um an den Kufen 60 bzw. 64 angebrachte Umlenkungen 92 und 94 geführt und direkt an einer Kraftmeßvorrichtung 96, die am Rumpf des Hubschraubers 14 befestigt ist, angeschlagen sind.

Die Enden 28 und 30 sind dabei durch jeweils zumindest eine Kappvorrichtung 98 und 100 geführt, die wiederum simultan auslösbar sind.

Es versteht sich, daß anstelle der Sicherung der Last 12 mittels des Tragseils 48, wie in Fig. 1 dargestellt ist, auch eine zweite mit der Vorrichtung 10 identische Vorrichtung vorgesehen sein kann, wobei diese Vorrichtungen dann in Längsrichtung des Hubschraubers hintereinander angeordnet sind und die Last 12 dann an beiden Vorrichtungen angehängt ist. Eine dieser beiden Vorrichtungen dient dann der redundanten Sicherung der Aufhängung der Last 12.

## Patentansprüche

1. Vorrichtung zum Anhängen einer Last (12) an einem Hubschrauber (14), mit zumindest einem Tragseil (20), das einen bezüglich einer Längsachse (24) des Hubschraubers (14) außermittigen ersten Seilabschnitt (22) und einen gegenüberliegenden außermittigen zweiten Seilabschnitt (26) aufweist, wobei das Tragseil (20) mit dem Hubschrauber (14) einerseits und der Last (12) andererseits verbunden ist, **dadurch gekennzeichnet, daß** Enden (28, 30) des Tragseils (20) hubschrauberseitig fest angeschlagen sind, und daß das Tragseil (20) mit der Last (12) relativ zu dieser beweglich verbunden ist, derart, daß die Last (12) entlang des Tragseils (20) verschiebbar ist.

2. Vorrichtung nach Anspruch 1, **dadurch gekennzeichnet, daß** das Tragseil (20) um eine Umlenkung (40, 42) geführt mit der Last (12) verbunden ist.

3. Vorrichtung nach Anspruch 1 oder 2, **dadurch gekennzeichnet, daß** das Tragseil (20) lastseitig durch zumindest eine Umlenkrolle (44, 46) geführt ist, die an der Last (12) angeschlagen ist.

4. Vorrichtung nach Anspruch 3, **dadurch gekennzeichnet, daß** die Umlenkrolle (44, 46) unverlierbar am Tragseil (20) angebracht und an der Last (12) abnehmbar befestigbar ist.

5. Vorrichtung nach einem der Ansprüche 1 bis 4, **dadurch gekennzeichnet, daß** der erste Seilabschnitt (22) und/oder der zweite Seilabschnitt (26) hubschrauberseitig mit einer ortsfesten Kraftmeßvorrichtung (82; 96) in Wirkverbindung steht/stehen, um eine auf das Tragseil (20) wirkende Zuglast zu messen.

6. Vorrichtung nach einem der Ansprüche 1 bis 5, **dadurch gekennzeichnet, daß** der erste Seilabschnitt (22) an einem äußeren Hebelarm (72) eines ersten zweiarmigen Hebels (62) und der zweite Seilabschnitt (26) an einem äußeren Hebelarm (74) eines zweiten zweiarmigen Hebels (66) angeschlagen sind, wobei die Hebel (62, 66) jeweils um eine etwa parallel zur Längsachse (24) des Hubschraubers (14) verlaufende Schwenkachse (68, 70) verschwenkbar am Hubschrauber (14) befestigt sind, wobei innere Hebelarme (76, 78) der Hebel (62, 66) miteinander durch ein Zugelement (80) verbunden sind.

7. Vorrichtung nach Anspruch 6, **dadurch gekennzeichnet, daß** der erste Hebel (62) und der zweite Hebel (66) einander gegenüberliegend am Landegestell des Hubschraubers (14) angeordnet sind.

8. Vorrichtung nach Anspruch 6 oder 7, **dadurch gekennzeichnet, daß** die äußeren Hebelarme (72, 74) mit ihrem freien Ende, an dem der erste beziehungsweise zweite Seilabschnitt (22, 26) angeschlagen sind, im Lastzustand die Kufen (60, 64) des Hubschraubers (14) nach unten überragen.

9. Vorrichtung nach einem der Ansprüche 6 bis 8, **dadurch gekennzeichnet, daß** die äußeren Hebelarme (72, 74) die Kufen (60, 64) des Hubschraubers (14) seitlich nach außen überragen.

10. Vorrichtung nach einem der Ansprüche 6 bis 9, **dadurch gekennzeichnet, daß** Enden der inneren Hebelarme (76, 78) beider Hebel (62, 66), an denen das Zugelement (80) angeschlagen ist, bezüglich der jeweiligen Schwenkachse (68, 70) so positioniert sind, daß die inneren Hebelarme (76, 78) im Lastzustand in gegensinnigen Schwenkrichtungen belastet sind.

11. Vorrichtung nach einem der Ansprüche 6 bis 10, **dadurch gekennzeichnet, daß** Enden der äußeren Hebelarme (72, 74), an denen die Enden (28, 30) des Tragseils (20) angeschlagen sind, tiefer liegen als die Schwenkachsen (68, 70) der Hebel (62, 66).

12. Vorrichtung nach Anspruch 5 und einem der Ansprüche 6 bis 11, **dadurch gekennzeichnet, daß** die Kraftmeßvorrichtung (82) die Zugspannung des Zugelements (80) mißt.

13. Vorrichtung nach einem der Ansprüche 6 bis 12, **dadurch gekennzeichnet, daß** das Zugelement (80) ein Seil ist.

14. Vorrichtung nach einem der Ansprüche 6 bis 13, **dadurch gekennzeichnet, daß** die Hebel (62, 66) im lastfreien Zustand in eine Lage vorgespannt sind, in der die äußeren Hebelarme (72, 74) und die inneren Hebelarme (76, 78) die Kufen (60, 64) des Hubschraubers nicht nach unten überragen.

15. Vorrichtung nach Anspruch 14, **dadurch gekennzeichnet, daß** die Hebel (62, 66) mit Federkraft beaufschlagt sind.

16. Vorrichtung nach einem der Ansprüche 1 bis 4 und nach Anspruch 5, **dadurch gekennzeichnet, daß** der erste Seilabschnitt (22) und/oder der zweite Seilabschnitt (26) über eine Umlenkung (92, 94) im Bereich des Landegestells des Hubschraubers (14) geführt ist/sind und an der Kraftmeßvorrichtung (96) direkt angreift/angreifen.

17. Vorrichtung nach einem der Ansprüche 1 bis 16, **dadurch gekennzeichnet, daß** am ersten Seilabschnitt (22) und am zweiten Seilabschnitt (26) im Bereich ihrer hubschrauberseitigen Befestigung jeweils zumindest eine Kappvorrichtung (86, 88; 98, 100) zum Kappen des Tragseils (20) angeordnet ist.

18. Vorrichtung nach einem der Ansprüche 6 bis 15 und nach Anspruch 17, **dadurch gekennzeichnet, daß** die äußeren Hebelarme (72, 74) rohrförmig ausgebildet sind, daß der erste Seilabschnitt (22) und der zweite Seilabschnitt (26) mit ihrem jeweiligen Ende (28, 30) in die äußeren Hebelarme (72, 74) eingeführt sind, und daß die Kappvorrichtungen 86, 88) in den äußeren Hebelarmen integriert sind.

19. Vorrichtung nach Anspruch 17 oder 18, **dadurch gekennzeichnet, daß** die Kappvorrichtungen (86, 88; 98, 100) simultan auslösbar sind.

20. Vorrichtung nach einem der Ansprüche 1 bis 19, **dadurch gekennzeichnet, daß** zwei Tragseile (20) vorgesehen sind, die in Längsrichtung des Hubschraubers (14) voneinander beabstandet angeordnet und unabhängig voneinander mit dem Hubschrauber (14) und der Last (12) verbunden sind.

21. Vorrichtung nach einem der Ansprüche 1 bis 20, **dadurch gekennzeichnet, daß** an dem ersten Seilabschnitt (22) und/oder an dem zweiten Seilabschnitt (26) zumindest eine Zugleine (99, 101) angebracht ist.

## Claims

1. A device for hanging a load (12) on a helicopter (14), having at least one load-bearing cable (20) which has a first cable section (22), which is off-center in relation to a longitudinal axis (24) of the helicopter (14), and a second off-center cable section (26) located opposite, the load-bearing cable (20) being connected to the helicopter (14), on the one hand, and to the load (12), on the other hand, **characterized in that** ends (28, 30) of the load-bearing cable (20) are fixedly attached to the helicopter, and that the load-bearing cable (20) is connected to the load (12) in a manner in which it can be moved relative to the latter, such that the load (12) can be displaced along the load-bearing cable (20).

2. The device of claim 1, **characterized in that** the load-bearing cable (20) is connected to the load (12) in a manner in which it is guided around a deflecting means (40, 42) at the load end.

3. The device of claim 1 or 2, **characterized in that** the load-bearing cable (20) is guided, at the load end, by at least one deflecting roller (44, 46) which is attached to the load (12).

4. The device of claim 3, **characterized in that** the deflecting roller (44, 46) is fitted in loss-proof fashion on the load-bearing cable (20) and can be fastened in a removable manner on the load (12).

5. The device of anyone of claims 1 through 4, **characterized in that** the first cable section (22) and/or the second cable section (26) are/is in operative connection, at the helicopter end, with a stationary force-measuring device (82; 96) in order to measure a tensile load acting on the load-bearing cable (20).

6. The device of anyone of claims 1 through 5, **characterized in that** the first cable section (22) is attached to an outer lever arm (72) of a first two-armed lever (62) and the second cable section (26) is attached to an outer lever arm (74) of a second two-armed lever (66), the levers (62, 66) each being fastened on the helicopter (14) such that they can be pivoted about a pivot axis (68, 70) running approximately parallel to the longitudinal axis (24) of the helicopter (14), wherein inner lever arms (76, 78) of the levers (62, 66) being connected to one another by a tie element (80).

7. The device of claim 6, **characterized in that** the first lever (62) and the second lever (66) are arranged opposite one another on the landing frame of the helicopter (14).

8. The device of claim 6 or 7, **characterized in that**, in the loaded state, the outer lever arms (72, 74) project downward beyond the skids (60, 64) of the helicopter (14) by way of their free end, to which the respective first and second cable sections (22, 26) are attached.

9. The device of anyone of claims 6 through 8, **characterized in that** the outer lever arms (72, 74) project laterally outward beyond the skids (60, 64) of the helicopter (14).

10. The device of anyone of claims 6 through 9, **characterized in that** ends of the inner lever arms (76, 78) of the two levers (62, 66) to which the tie element (80) is attached are positioned in relation to the respective pivot axis (68, 70) such that, in the loaded state, the inner lever arms (66, 68) are subjected to loading in opposite pivoting directions.

11. The device of anyone of claims 6 through 10, **characterized in that** ends of the outer lever arms (72, 74) to which the ends (28, 30) of the load-bearing cable (20) are attached are at a lower level than the pivot axes ( 68, 70) of the levers (62, 66).

12. The device of claim 5 and of anyone of claims 6 through 11, **characterized in that** the force-measuring device (82) measures the tensile stressing of the tie element (80).

13. The device of anyone of claims 6 through 12, **characterized in that** the tie element (80) is a cable.

14. The device of anyone of claims 6 through 13, **characterized in that**, in the load-free state, the levers (62, 66) are preloaded into a position in which the outer lever arms (72, 74) and the inner lever arms (76, 78) do not project downward beyond the skids (60, 64) of the helicopter.

15. The device of claim 14, **characterized in that** the levers (62, 66) are subjected to spring force.

16. The device of anyone of claims 1 through 4 and of claim 5, **characterized in that** the first cable section (22) and/or the second cable section (26) are/is guided over a deflecting means (92, 94) in the region of the landing frame of the helicopter (14) and act/acts directly on the force-measuring device (96).

17. The device of anyone of claims 1 through 16, **characterized in that** at least one cutting device (86, 88; 98, 100) for cutting the load-bearing cable (20) is arranged on the first cable section (22) and on the second cable section (26), in the region where they are fastened on the helicopter.

18. The device of anyone of claims 6 through 15 and of claim 17, **characterized in that** the outer lever arms (72, 74) are of tubular design, that the first cable section (22) and the second cable section (26) have their respective end (28, 30) introduced into the outer lever arms (72, 74), and that the cutting devices (86, 88) are integrated in the outer lever arms.

19. The device of claim 17 or 18, **characterized in that** the cutting devices (86, 88; 98, 100) can be triggered simultaneously.

20. The device of anyone of claims 1 through 19, **characterized in that** there are provided two load-bearing cables (20) which are spaced apart from one another in the longitudinal direction of the helicopter (14) and are connected, independently of one another, to the helicopter (14) and to the load (12).

21. The device of anyone of claims 1 through 20, **characterized in that** at least one pulling line (99, 101) is fitted on the first cable section (22) and/or on the second cable section (26).

## Revendications

1. Dispositif pour accrocher une charge (12) sur un hélicoptère (14), avec au moins un câble porteur (20), qui présente une première partie de câble (22) excentrée par rapport à un axe longitudinal (24) de l'hélicoptère (14) et une seconde partie de câble (26) excentrée et opposée, le câble porteur (20) étant relié à l'hélicoptère (14) d'une part et à la charge (12) d'autre part, **caractérisé en ce que** des extrémités (28, 30) du câble porteur (20) sont accrochées de façon fixe côté hélicoptère et **en ce que** le câble porteur (20) est relié à la charge (12) de façon mobile par rapport à celle-ci, de telle sorte que la charge (12) est coulissante le long du câble porteur (20).

2. Dispositif selon la revendication 1 **caractérisé en ce que** le câble porteur (20) est relié à la charge (12) de façon guidée autour d'un renvoi (40, 42).

3. Dispositif selon la revendication 1 ou 2, **caractérisé en ce que** le câble porteur (20) est guidé côté charge par au moins un galet de renvoi (44, 46), qui est accroché à la charge (12).

4. Dispositif selon la revendication 3, **caractérisé en ce que** le galet de renvoi (44, 46) est disposé de façon imperdable sur le câble porteur (20) et peut être fixé de façon amovible à la charge (12).

5. Dispositif selon l'une quelconque des revendications 1 à 4, **caractérisé en ce que** la première partie du câble (22) et/ou la seconde partie de câble (26) est/sont en liaison active côté hélicoptère avec un dispositif de mesure de force (82 ; 96) fixe afin de mesurer une charge de traction agissant sur le câble porteur (20).

6. Dispositif selon l'une quelconque des revendications 1 à 5, **caractérisé en ce que** la première partie de câble (22) et la seconde partie de câble (26) sont accrochées respectivement sur un bras de levier (72) extérieur d'un premier levier (62) à deux bras et sur un bras de levier (74) extérieur d'un second levier (66) à deux bras, les leviers (62, 66) étant fixés sur l'hélicoptère (14) de façon à pouvoir pivoter respectivement autour d'un axe de pivotement (68, 70) agencé à peu près parallèlement à l'axe longitudinal (24) de l'hélicoptère (14), des bras de levier (76, 78) internes des leviers (62, 66) étant reliés entre eux par un élément de traction (80).

7. Dispositif selon la revendication 6, **caractérisé en ce que** le premier levier (62) et le second levier (66) sont disposés l'un en face de l'autre sur le train d'atterrissage de l'hélicoptère (14).

8. Dispositif selon la revendication 6 ou 7, **caractérisé en ce que** les bras de levier (72, 74) extérieurs dépassent avec leur extrémité libre, sur laquelle sont accrochées les première et seconde parties de câble (22, 26), des patins (60, 64) de l'hélicoptère (14) vers le bas dans l'état de charge.

9. Dispositif selon l'une des revendications 6 à 8, **caractérisé en ce que** les bras de levier (72, 74) extérieurs dépassent des patins (60, 64) de l'hélicoptère (14) sur le côté vers l'extérieur.

10. Dispositif selon l'une des revendications 6 à 9, **caractérisé en ce que** des extrémités des bras de levier (76, 78) intérieurs des deux leviers (62, 66), sur lesquelles l'élément de traction (80) est accroché, sont positionnées par rapport à l'axe de pivotement (68, 70) respectif de telle sorte que les bras de levier (76, 78) intérieurs sont sollicités dans l'état de charge dans des sens de pivotement contraires.

11. Dispositif selon l'une des revendications 6 à 10, **caractérisé en ce que** des extrémités des bras de levier (72, 74) extérieurs, sur lesquelles les extrémités (28, 30) du câble porteur (20) sont accrochées, sont plus basses que les axes de pivotement (68, 70) des leviers (62, 66).

12. Dispositif selon la revendication 5 et l'une des revendications 6 à 11, **caractérisé en ce que** le dispositif de mesure de force (82) mesure la tension de traction de l'élément de traction (80).

13. Dispositif selon l'une des revendications 6 à 12, **caractérisé en ce que** l'élément de traction (80) est un câble.

14. Dispositif selon l'une des revendications 6 à 13, **caractérisé en ce que** les leviers (62, 66) sont prétendus dans l'état sans charge dans une position, dans laquelle les bras de levier (72, 74) extérieurs et les bras de levier (76, 78) intérieurs ne dépassent pas vers le bas des patins (60, 64) de l'hélicoptère.

15. Dispositif selon la revendication 14, **caractérisé en ce que** les leviers (62, 66) sont sollicités avec une force de ressort.

16. Dispositif selon l'une des revendications 1 à 4 et selon la revendication 5, **caractérisé en ce que** la première partie de câble (22) et/ou la seconde partie de câble (26) est/sont guidée(s) par un renvoi (92, 94) dans la zone du train d'atterrissage de l'hélicoptère (14) et s'applique/s'appliquent directement sur le dispositif de mesure de force (96).

17. Dispositif selon l'une des revendications 1 à 16, **caractérisé en ce que** chaque fois au moins un dispositif de coupe (86, 88 ; 98, 100) pour la coupe du câble porteur (20) est disposé sur la première partie de câble (22) et sur la seconde partie de câble (26) dans la zone de sa fixation côté hélicoptère.

18. Dispositif selon l'une des revendications 6 à 15 et selon la revendication 17, **caractérisé en ce que** les bras de levier (72, 74) extérieurs sont conçus en forme de tubes, **en ce que** la première partie de câble (22) et la seconde partie de câble (26) sont introduites avec leurs extrémités (28, 30) respectives dans les bras de levier (72, 74) extérieurs et **en ce que** les dispositifs de coupe (86, 88) sont intégrés dans les bras de levier extérieurs.

19. Dispositif selon la revendication 17 ou 18, **caractérisé en ce que** les dispositifs de coupe (86, 88 ; 98, 100) peuvent être déclenchés simultanément.

20. Dispositif selon l'une des revendications 1 à 19, **caractérisé en ce qu'**il est prévu deux câbles porteurs (20), qui sont disposés à distance l'un de l'autre dans le sens longitudinal de l'hélicoptère (14) et sont reliés indépendamment l'un de l'autre à l'hélicoptère (14) et à la charge (12).

21. Dispositif selon l'une des revendications 1 à 20, **caractérisé en ce qu'**au moins une corde de traction (99, 101) est disposée sur la première partie de câble (22) et/ou sur la seconde partie de câble (26).
